# EUROPEAN PATENT SPECIFICATION

(11) **EP 0 827 866 B1**
(45) Date of publication and mention of the grant of the patent: **15.05.2002**
(21) Application number: 97202620.7
(22) Date of filing: 26.08.1997
(51) Int. Cl.: B60R 9/06

(54) **A load carrier**
Lastträger
Porteur des charges

(30) Priority: 09.09.1996 SE 9603280
(43) Date of publication of application: 11.03.1998
(73) Proprietor: Industri AB Thule, S-330 33 Hillerstorp (SE)
(72) Inventor: Ferman, Magnus, 33154 Värnamo (SE)
(74) Representative: Wallengren, Yngvar

(56) References cited:
- EP-A- 0 645 284
- DE-A- 4 330 001
- US-A- 4 830 250
- US-A- 5 211 323
- US-A- 5 259 542

## Description

### TECHNICAL FIELD

The present invention relates to a load carrier for mounting rearwardly on a vehicle according to the preamble of claim 1.

### BACKGROUND ART

Load carriers of the above-outlined type are known in a plurality of different detailed designs. For example, reference may be made in this context to US 5 305 936 US 4 518 108 US 5 259 542, US 5 211 323, US 4 830 250, DE 4 330 001, and EP-A-0 645 284.

In the arrangement disclosed in US 5 305 936, use is made of two approximately U-shaped frames of which the one is substantially vertical and stands, with its lower, transversely directed portion, on the fender of the vehicle, while the other is approximately horizontal and rests with its forwardly directed transverse portion on the rear boot lid or hatch of the vehicle. The frames are pivotally connected to one another and the rearwardly directed, free legs of the approximately horizontal frame serve as carrier means for the load, preferably one or more cycles, which is to be carried.

A load carrier of this type is expedient such that it is capable of being collapsed to a substantially flat package.

Furthermore, on many occasions it can be as good as universally applicable as a result of its adjustment possibilities and by securement using clamping straps.

On the negative side is the fact that the cycle loaded on the load carrier hangs so low that it normally conceals both the rear lights and indicators of the vehicle, and also its registration plate. In addition, the load is located relatively far behind the vehicle and the vertical frame of the load carrier, with the result that stresses will be considerable.

The load carrier disclosed in US 4 518 108 is designed in a slightly different manner, in that it is partly located on the upper surface of the boot lid of the vehicle.

While, in this design and construction, the carrier portion which is intended for carrying the load (preferably one or more cycles) is placed further forward and is located over the rear edge area of the boot lid, the load will still hang down so far that it conceals the rear lights and registration plate of the vehicle. As a result of the placing of the carrier portion, it is also difficult to lift up a load, since the load must be lifted over the rear end of the carrier portion which points obliauelv upwards.

US 5 259 542 discloses a bicycle carrier to be mounted at the rear end of a motor vehickle. The carrier has two U-shaped frame members connected together by means of pivots. Also connected to the pivots are two rearwardly extending arms, which at their distal ends, carry the bicycle frame. The two U-shaped frame members are supported on the vehicle.

This bicycle carrier has the same drawbacks as the one described in US 5 305 936.

The bicycle carrier described in US 4 830 250 is very similar to the above bicycle carrier and has, therefore, the same shortcommings.

Also the bicycle carrier of US 5 211 323 is very similar to those described in US 5 259 542 and US 4 830 250 and has, therefore, the same drawbacks.

EP 0 645 284 discloses a bicycle carrier according to the preamble of claim 1, which is intended for use at the back of a vehicle. The carrier includes a longitudinal support member which is supported on the back bumper of the vehicle. A pivotable U-shaped member is supported somewhere at the back portion of the vehicle. This member can be pivoted for adaption to almost any type of vehicle. Near the upper part of the longitudinal support, there is a carrier member, which is also pivotable, in order to assume a mainly horizontal position regardless of the type of vehicle. The bicycles on the mounted carrier will be carried at such a height that the rear lights, indicators and registration plate of the vehicle will be visible.

However, the major disadvantage of this construction is that it is difficult to lift a bicycle to the height of the carrier member at the times of loading and unloading.

Finally, DE 4 330 001 discloses a load carrier adaptable for the transportation of various types of loads such as skis and bicycles. This carrier has a main frame member that is pivotable through approximately 120° about a horizontally and transversely oriented shaft that is fastened to the rear bumper of the from a lowered loading position to an elevated, substantially vertical transporting position. At the distal end of the main fram there are fastened individually pivotable loading frames to co-operate with the load. These loading frames are switchable between a low loading position alomost at ground level and an elevated transporting position above the trunk of the vechicle.

This load carrier offers a possibility of transporting a bicycle at such an elevated level that it does not conceal the rear lights, the indicators and the registration plate of the vechicle. On the other hand this carrier is very complicated due to the pivots connecting the frames. Also, there is spring means compensating the weight of the loading frames and the load thereon.

### PROBLEM STRUCTURE

The present invention has for its object to design the load carrier mentioned by way of introduction such that it carries the load, preferably the cycle or cycles, so highly that the load does not conceal the vehicle's rear registration plate and its rear lights. Furthermore, the present invention has for its object to realise a load carrier which is designed such that the parts carrying the load are switchable between a rear, lower loading position where the lifting height up to the load carrier is limited, and an upper, forward transport position where the load is located at a greater height and further forward in the direction of travel of the vehicle. The present invention also has for its object to realise a load carrier which is simple and economical in manufacture and in operation.

### SOLUTION

The objects forming the basis of the present invention will be attained if the load carrier intimated by way of introduction is characterized in that there is disposed, between the support arrangement and the carrier portion, an elongated connecting portion whose one end region is connected to the carrier portion by means of a pivot and whose opposing end region is, via a lockable pivot, connected to the support arrangement, said pivot and said lockable pivot having pivot axes being substantially horizontal and transversely oriented in relation to longitudinal direction of the vehicle.

Further advantages will be attained according to the present invention if the subject matter of the present invention is also given one or more of the characterizing features as set forth in appended Claims 2 to 7.

### BRIEF DESCRIPTION OF THE ACCOMPANYING DRAWINGS

The present invention will now be described in greater detail hereinbelow, with reference to the accompanying Drawings. In the accompanying Drawings:
- Fig. 1: shows the subject matter of the present invention mounted on a vehicle of the sedan type, and in the loading and unloading position;
- Fig. 2: shows the subject matter of the present invention mounted on a vehicle of the hatchback type, and in the transport position;
- Fig. 3: shows a pivot between the support portions and the connecting portion, seen in the direction of the arrow A in Fig. 1;
- Fig. 4: shows an end plug included in the pivot of Fig. 3; and
- Fig. 5: is a vertical section through the pivot according to Fig. 3 and in particular through its pivot shaft.

### DESCRIPTION OF PREFERRED EMBODIMENT

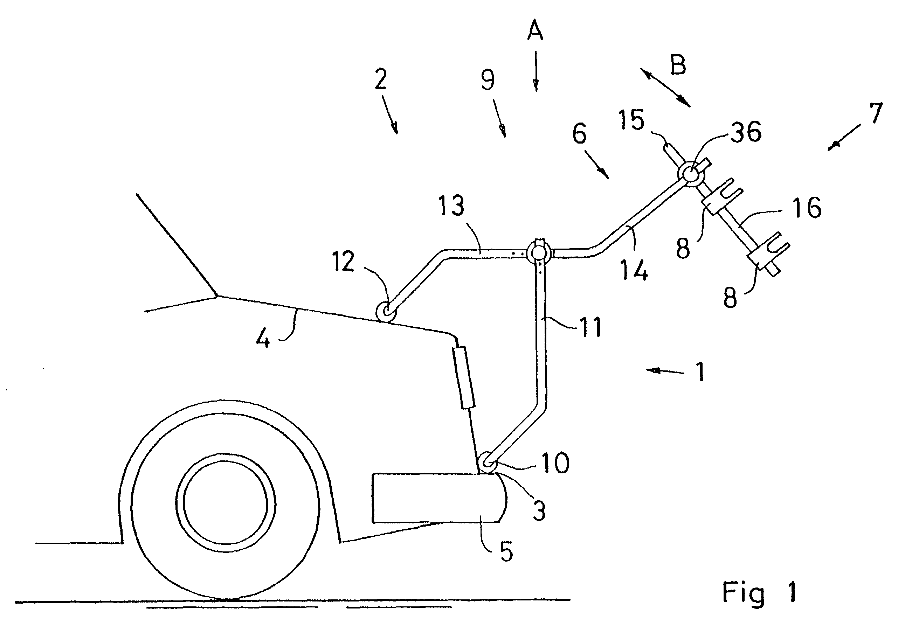

It will be apparent from Fig. 1 that the subject matter of the present invention includes a lower support portion 1 which, with a lower end portion, rests on a lower support surface 3 on the vehicle. The load carrier further includes an upper support portion 2 which, with a forward end portion, rests on a higher support surface 4 on the vehicle. The two support portions 1 and 2 together form a support arrangement.

The support arrangement 1 and 2 is securable on the vehicle by means of clamping straps (not shown), in which event in Fig. 1 at least one, but possibly two clamping straps connect the upper support portion 2 or the carrier portion 7 to the front edge of the boot lid, while at least one, but preferably two clamping straps connect the lower support portion 1 to the lower edge of the boot lid, or possibly to the bumper or fender 5 of the vehicle. In order to absorb load stresses in the lateral direction of the vehicle, there are further suitably included clamping straps which extend in the transverse direction of the vehicle, more or less horizontally, and which, for example, may grasp about the opposing side edges of the boot lid.

The support arrangement 1 and 2 is connected to a connecting portion 6 which, in its upper/rear end (i.e. the end which is turned to face away from the support arrangement), is connected to a carrier portion 7 with a bracket 8 for securing and supporting a load, preferably one or more cycles. The connecting portion 6 is connected to the support arrangement 1 and 2 by the intermediary of a pivot 9. As a result, the connecting portion 6 is pivotal in accordance with the double-headed arrow B from the loading and unloading position illustrated in Fig. 1 to a counterclockwise pivoted transport position where the carrier portion 7 is located at greater height and is pivoted to a forward position in the region above the boot lid 4 or its rear edge portion. The carrier portion 7 being pivoted upwards and forwards in this manner, the load will be lifted up so high that the rear lights and registration plate of the vehicle will not be concealed by the load. Furthermore, the load is pivoted forwards, and so, above all, the loading in those clamping straps which are hooked fast to the forward edge region of the boot lid is considerably reduced. At the same time, the compression loading is of course also reduced by the intermediary of the lower support portion 1.

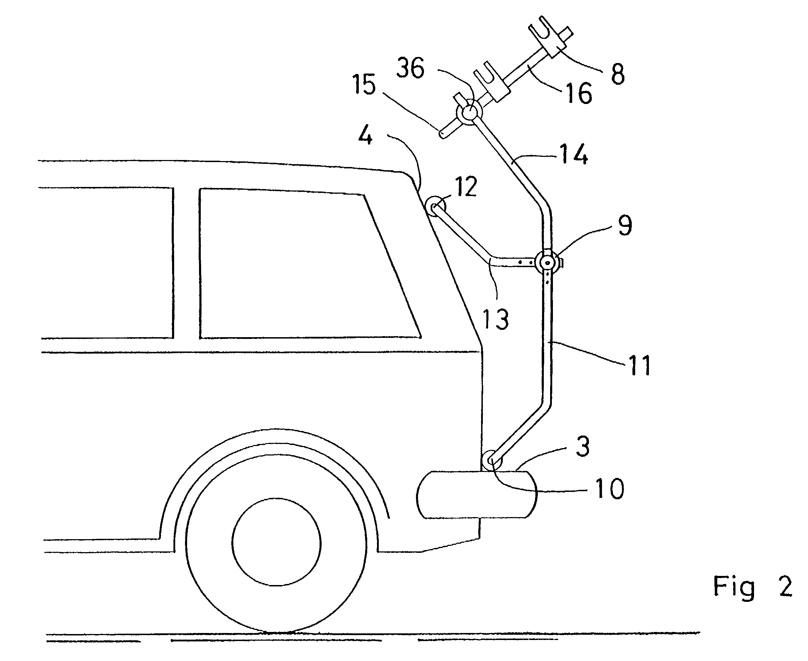

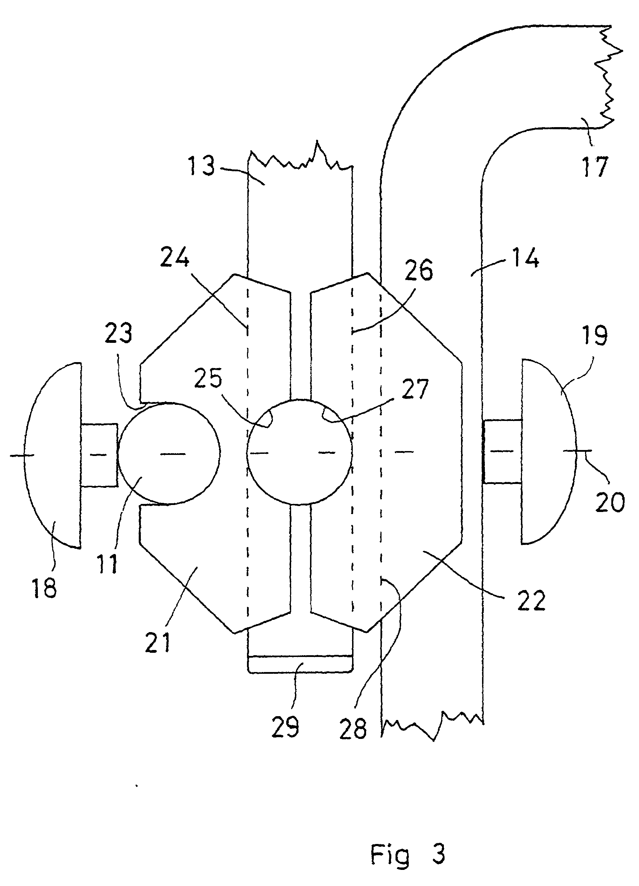

Both the two support portions 1 and 2 and the connecting portion 6 and carrier portion 7 are designed as stirrups which are approximately U-shaped in plan view and in which the lower support portion 1 has a transverse portion 10 and two approximately parallel shanks 11 pointing in the same direction. Correspondingly, the upper support portion 2 has a transverse portion 12 and two substantially parallel shanks 13 pointing in the same direction. The connecting portion 6 also has a transverse portion 17 which is not shown in Figs. 1 and 2 since it is located between the parallel shanks of the upper support portion 2 (see however Fig. 3). On the other hand, the shanks 14 of the connecting portion 6 are clearly apparent from the Figure. Finally, the carrier portion 7 has a transverse portion 15 and two approximately parallel shanks 16 pointing in the same direction.

The pivot 9 includes two mirror-reversed joints in which the left-hand joint, i.e. that which is visible in Figs. 1 and 2, is shown in Fig. 3 according to the arrow A in Fig. 1. It will be apparent that the lower support portion 1 and the upper support portion 2 are united in the pivot at the free ends of their shanks 11 and 13, respectively. It will further be apparent that the connecting portion 6 cooperates with the pivot 9 in the proximity of its transverse portion 17.

The pivot 9 includes a first pivot joint which permits mutual pivoting between the lower support portion 1 and the upper support portion 2. This pivot joint has an operating device 18 for its switching between a position where the support portions are fixedly locked in relation to one another, and an open position where the support portions are pivotal in relation to one another. The pivot 9 also includes a second pivot joint between the support arrangement 1 and 2 and the connecting portion 6. This pivot joint also has its own operating device 19 which permits the second pivot joint independently of the first to be switched between a locked position where the connecting portion 6 is fixedly locked in relation to the support arrangement 1 and 2, and an open position where the connecting portion may be pivoted in accordance with the arrow B in Fig. 1. Both of the pivot joints have a common pivot shaft 20.
The pivot 9 includes two spacers 21 and 22 which are preferably of identical design. On its outside (in Fig. 3 the left-hand side, and in Fig. 1 the side of the Figure facing towards the reader), the outer spacer 21 has a groove 23 with a semicylindrical bottom, in which the one shank 11 of the lower support portion 1 is largely accommodated. On its inside, the outer spacer has two intersecting recesses 24 and 25 which also have approximately semicylindrical cross sectional configuration. Correspondingly, the inner spacer (the right-hand in Fig. 3) has, on its outside (the left-hand), two intersecting recesses 26 and 27 and, on its inside, a recess 28 corresponding to the recess or groove 23 on the outside of the outer spacer.

For the pivot 9 to be able to permit pivoting and locking of the two support portions 1 and 2 in relation to one another, the shaft 20 is, in practice, designed as a threaded bar which has a stop or arrest member interiorly in the shank 13 of the upper support 2. Hereby, the threaded shaft is fixed in its axial direction in relation to the upper support portion. The operating device 18 is designed as a threaded wheel and may thus be screwed along the threaded shaft. As a result of the arrest member on the threaded shaft, a possibility is created, by backing-off the wheel 18, to pivot the two support portions 1 and 2 in relation to one another, preferably in that the shank 13 is disengaged from the recess 24.

In a corresponding manner, the inner operating device 19 is designed as a threaded wheel which may be screwed along the threaded shaft 20. By backing-off the wheel 19, it is possible to realise pivoting of the connecting portion 6 in that its shanks are forced or pressed out of the recess 28 so that they are free for a pivoting motion, or in that the spacer 22 is displaced to the right in Fig. 3 so far that the shank 13 is freely disengaged from the recess 26.

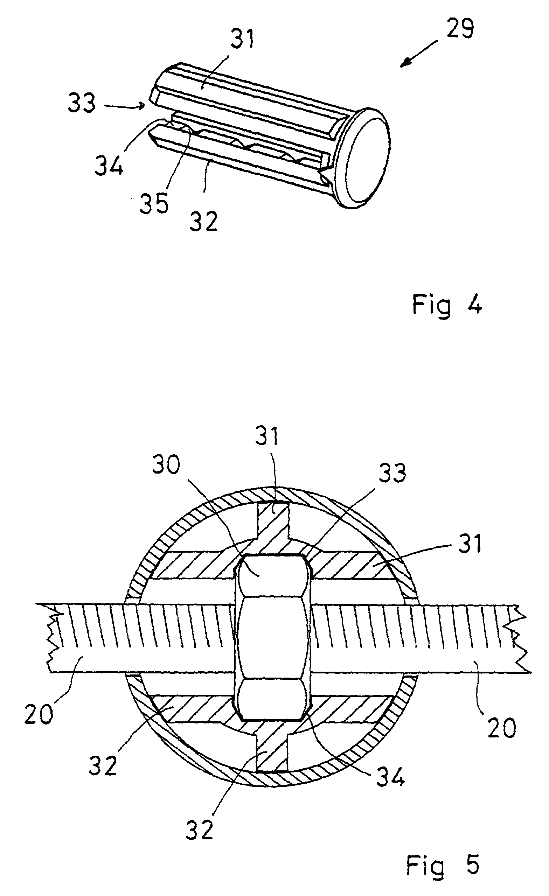

Fig. 4 shows in perspective an end plug 29 which extends in to the shank 13 of the upper support portion 2 at least up to and slightly past the pivot shaft 20. That nut 30 which provides the axial locking of the shaft 20 in relation to the shank 13 is shown in Fig. 5 and is locked in its direction of rotation and in the longitudinal direction of the threaded shaft 20 by cooperation with the end plug 29. For this reason, the end plug has two elongate prongs 31 and 32 which, on their sides facing towards one another, have longitudinal grooves 33 and 34, respectively, in which the nut 30 is accommodated. The side edges of the grooves abut against the flank surfaces of the nut 30 and hereby fix the nut in the longitudinal direction of the shaft. The grooves 33 and 34 are further provided with recesses 35 which prevent the nut 30 from rotating in relation to the end plug 29. The recesses 35 may possibly be dispensed with, whereby it becomes possible first to assemble the threaded shaft or bar 20 and the nut 30 and thereafter slide in the end plug 29 so that the nut enters into its grooves 33 and 34 and is thereby prevented from rotating.

In Fig. 3, the grooves 23 - 28 are disposed either in parallel or at right angles. This implies that the two support portions 1 and 2 may be pivoted in relation to one another stepwise through approximately 90°. Correspondingly, the connecting portion 6 may be pivoted stepwise through approximately 90° in relation to and independently of the two support portions 1 and 2. It is thus possible to find pivot positions where the support portions 1 and 2 and the connecting portion lie substantially in one and the same plane. In this position, the subject matter of the present invention is in the collapsed state for transport.

Correspondingly, the carrier portion 7 is connected to the connecting portion 6 by the intermediary of pivots 36 which permit stepwise pivotal adjustment between these parts. Suitably, the pivot step is approximately 90° here as well. By pivoting the carrier portion 7 through 90° in a clockwise direction, the carrier portion will be pivoted in between both shanks 14 of the connecting portion 6, for which reason the carrier portion 7 may also be pivoted to a position where it lies in a plane which is substantially common to the plane of both of the support portions, the connecting portion and the carrier portion.

Fig. 2 shows the subject matter of the present invention disposed on a vehicle of the hatchback or combi type. Further, in Fig. 2 the connecting portion 6 and the carrier portion 7 are in the transport position. As regards the support arrangement 1 and 2, the only difference compared with Fig. 1 is that the upper support portion 2 is turned to face with its transverse portion 12 forwards/upwards instead of, as in Fig. 1, forwards/downwards. Such a modification of the orientation of the upper support portion 2 is readily achieved by dismantling the pivot 9.

As an alternative to the pivot 9, it is possible to separate the pivot function between the two support portions 1 and 2 and from the pivot function between support arrangement and the connecting portion 6.

## Claims

1. A load carrier for mounting rearwardly on a vehicle and comprising:
a support arrangement for supporting the load carrier on the vehicle, the support arrangement having a lower support portion (1) for cooperation with a lower portion (3) of the vehicle, and an upper support portion (2) for cooperation with a higher portion (4) of the vehicle, said support portions (1, 2) being pivotally and adjustably interconnected with one another,
a carrier portion (7) for having a bracket (8) retaining and carrying a load on the load carrier so highly that the load does not conceal the vehicle's rear registration plate or its rear lights, the carrier portion being pivotally adjustable in relation to the support arrangement; and
anchorage devices for fixedly securing the load carrier on the vehicle,
**characterized in that** there is disposed, between the support arrangement and the carrier portion (7), an elongated connecting portion (6) whose one end region is connected to the carrier portion (7) by means of a pivot (36) and whose opposing end region is, via a lockable pivot (9), connected to the support arrangement, said pivot (36) and said lockable pivot (9) having pivot axes (20) being substantially horizontal and transversely oriented in relation to longitudinal direction of the vehicle.

2. The load carrier as claimed in Claim 1, **characterized in that** the pivot (9) connecting the connecting portion (6) with the support portion has a pivot axis which is common to the pivot axis of the pivot (9) connecting the support portions (1, 2).

3. The load carrier as claimed in Claim 1 or 2, **characterized in that** the pivot (36) connecting the connecting portion (6) and the carrier portion (7) is lockable.

4. The load carrier as claimed in any of Claims 1 to 3, **characterized in that** the two support portions (1, 2), the connecting portion (6) and the carrier portion (7) each have a transverse portion (10, 12, 17, 15, respectively), from whose opposing end regions a shank (11, 13, 14, 16, respectively) extends out substantially at right angles to that transverse portion, the shanks on the same transverse portion extending in the same direction and being substantially parallel.

5. The load carrier as claimed in Claim 4, **characterized in that** the pivot (36) between the carrier portion (7) and the connecting portion (6) is located in the region of the free ends of the shanks (14) of the connecting portion and the transverse portion (15) of the carrier portion.

6. The load carrier as claimed in Claim 4 or 5, **characterized in that** the pivot (9) between the support arrangement and the connecting portion (6) is disposed in the region of the transverse portion (17) of the connecting portion and in the regions of the free ends of the shanks (11, 13, respectively) of the support portions (1, 2).

7. The load carrier as claimed in any of Claims 1 to 6, **characterized in that** the pivot (9) for connecting the support arrangement and the connecting portion (6) has a first (18) and a second (19) operating device, said first operating device (18) being provided for the mutual rotation and locking of the support portions (1, 2), while the second operating device (19) is provided for the rotation and locking of the connecting portion (6) in relation to the support arrangement.

## Patentansprüche

1. Lastträger zur Befestigung im hinteren Bereich eines Fahrzeugs, umfassend:
eine Stützanordnung zum Abstützen des Lastträgers an dem Fahrzeug, wobei die Stützanordnung einen unteren Stützabschnitt (1) zur Zusammenwirkung mit einem unteren Abschnitt (3) des Fahrzeugs und einen oberen Stützabschnitt (2) zur Zusammenwirkung mit einem höheren Abschnitt (4) des Fahrzeugs hat, wobei die Stützabschnitte (1,2) drehbar und verstellbar miteinander verbunden sind;
einen Trägerabschnitt (7) für einen Halter (8), welcher eine Last an dem Lastträger in einer solchen Höhe hält und trägt, dass die Last das hintere Kennzeichen oder die Rücklichter des Fahrzeugs nicht verdeckt, wobei der Trägerabschnitt in bezug auf die Stützanordnung drehbar und verstellbar ist; und
Verankerungsvorrichtungen zum festen Sichern des Lastträgers an dem Fahrzeug,
**dadurch gekennzeichnet, dass** zwischen der Stützanordnung und dem Trägerabschnitt (7) ein langgestreckter Verbindungsabschnitt (6) angeordnet ist, dessen einer Endbereich mit dem Trägerabschnitt (7) in einem Drehpunkt (36) verbunden ist und dessen gegenüberliegender Endbereich mit der Stützanordnung in einem weiteren verriegelbaren Drehpunkt (9) verbunden ist, wobei der eine Drehpunkt (36) und der verriegelbare Drehpunkt (9) Drehachsen (20) aufweisen, die im wesentlichen horizontal und quer in bezug auf die Längsrichtung des Fahrzeugs ausgerichtet sind.

2. Lastträger nach Anspruch 1, **dadurch gekennzeichnet, dass** der den Verbindungsabschnitt (6) mit dem Stützabschnitt verbindende Drehpunkt (9) eine mit dem die Stützabschnitte (1,2) verbindenden Drehpunkt (9) gemeinsame Drehachse besitzt.

3. Lastträger nach Anspruch 1 oder 2, **dadurch gekennzeichnet, dass** der Drehpunkt (36), welcher den Verbindungsabschnitt (6) und den Trägerabschnitt (7) verbindet, verriegelbar ist.

4. Lastträger nach einem der Ansprüche 1 bis 3, **dadurch gekennzeichnet, dass** die zwei Stützabschnitte (1,2), der Verbindungsabschnitt (6) und der Trägerabschnitt (7) jeweils einen transversalen Abschnitt (10,12,17 bzw. 15) haben, von dessen gegenüberliegenden Endbereichen sich ein Schaft (11,13,14 bzw. 16) im wesentlichen im rechten Winkel zu dem transversalen Abschnitt erstreckt, wobei die Schäfte an demselben transversalen Abschnitt sich in dieselbe Richtung erstrecken und im wesentlichen parallel sind.

5. Lastträger nach Anspruch 4, **dadurch gekennzeichnet, dass** der Drehpunkt (36) zwischen dem Trägerabschnitt (7) und dem Verbindungsabschnitt (6) in dem Bereich der freien Enden der Schäfte (14) des Verbindungsabschnitts und des transversalen Abschnitts (15) des Trägerabschnitts angeordnet ist.

6. Lastträger nach Anspruch 4 oder 5, **dadurch gekennzeichnet, dass** der Drehpunkt (9) zwischen der Stützanordnung und dem Verbindungsabschnitt (6) im Bereich des transversalen Abschnitts (17) des Verbindungsabschnitts und in den Bereichen der freien Enden der Schäfte (11 bzw. 13) der Stützabschnitte (1,2) angeordnet ist.

7. Lastträger nach einem der Ansprüche 1 bis 6, **dadurch gekennzeichnet, dass** der Drehpunkt (9) zum Verbinden der Stützanordnung und des Verbindungsabschnitts (6) eine erste (18) und eine zweite (19) Betätigungsvorrichtung aufweist, wobei die erste Betätigungsvorrichtung (18) für die Gegeneinander-Drehung und Verriegelung der Stützabschnitte (1,2) vorgesehen ist und die zweite Betätigungsvorrichtung (19) für die Drehung und Verriegelung des Verbindungsabschnitts (6) in Bezug zu der Stützanordnung vorgesehen ist.

## Revendications

1. Porte-charge pour montage vers l'arrière sur un véhicule, comprenant :
un dispositif de support pour supporter le porte-charge sur le véhicule, le dispositif de support comportant une partie de support inférieure (1) pour coopération avec une partie inférieure (3) du véhicule, et une partie de support supérieure (2) pour coopération avec une partie supérieure (4) du véhicule, les dites parties de support (1, 2) étant mutuellement interconnectées de façon pivotante et réglable ;
une partie de réception de charge (7) pourvu d'un élément de fixation (8) pour retenir et porter une charge sur le porte-charge à une hauteur suffisante pour que la charge ne cache pas la plaque d'immatriculation arrière du véhicule ou les feux arrière du véhicule, la partie de réception de charge étant réglable de façon pivotante par rapport au dispositif de support; et
des dispositifs d'ancrage, pour bloquer de façon fixe le porte-charge sur le véhicule ;
**caractérisé en ce qu'**il est prévu, entre le dispositif de support et la partie de réception de charge (7), une partie de liaison allongée (6) dont une région d'extrémité est connectée à la partie de réception de charge (7) au moyen d'un pivot (36) et dont la région d'extrémité opposée est connectée, par l'intermédiaire d'un pivot verrouillable (9), au dispositif de support, le dit pivot (36) et le dit pivot verrouillable (9) ayant des axes de pivot (20) qui sont sensiblement horizontaux et orientés transversalement par rapport à la direction longitudinale du véhicule.

2. Porte-charge selon la revendication 1, **caractérisé en ce que** le pivot (9) connectant la partie de liaison (6) à la partie de support possède un axe de pivot qui est commun à l'axe de pivot du pivot (9) reliant les parties de support (1, 2).

3. Porte-charge selon la revendication 1 ou 2, **caractérisé en ce que** le pivot (36) connectant la partie de liaison (6) et la partie de réception de charge (7) est verrouillable.

4. Porte-charge selon une quelconque des revendications 1 à 3, **caractérisé en ce que** les deux parties de support (1, 2), la partie de liaison (6) et la partie de réception de charge (7) comprennent chacune une partie transversale (10, 12, 17, 15, respectivement), à partir des régions d'extrémité opposées de laquelle s'étend une tige (11, 13, 14, 16, respectivement) sensiblement perpendiculaire à cette partie transversale, les tiges qui partent de la même partie transversale s'étendant dans la même direction et étant sensiblement parallèles.

5. Porte-charge selon la revendication 4, **caractérisé en ce que** le pivot (36) entre la partie de réception de charge (7) et la partie de liaison (6) est situé dans la région des extrémités libres des tiges (14) de la partie de liaison et de la partie transversale (15) de la partie de réception de charge.

6. Porte-charge selon la revendication 4 ou 5, **caractérisé en ce que** le pivot (9) entre le dispositif de support et la partie de liaison (6) est situé dans la région de la partie transversale (17) de la partie de liaison et dans les régions des extrémités libres des tiges (11, 13, respectivement) des parties de support (1, 2).

7. Porte-charge selon une quelconque des revendications 1 à 6, **caractérisé en ce que** le pivot (9) pour connecter le dispositif de support et la partie de liaison (6) comprend un premier (18) et un deuxième (19) éléments de manoeuvre, le dit premier élément de manoeuvre (18) étant prévu pour la rotation mutuelle et le verrouillage des parties de support (1, 2), tandis que le deuxième élément de manoeuvre (19) est prévu pour la rotation et le blocage de la partie de liaison (6) par rapport au dispositif de support.
